(19) Europäisches Patentamt
European Patent Office
Office européen des brevets

(11) Numéro de publication: **0 348 314**
**A1**

# (12) DEMANDE DE BREVET EUROPEEN

(21) Numéro de dépôt: **89420222.5**

(22) Date de dépôt: **19.06.89**

(51) Int. Cl.4: **A 01 N 43/50**
//(A01N43/50,37:48,47:30)

(30) Priorité: **21.06.88 FR 8808564**

(43) Date de publication de la demande:
**27.12.89 Bulletin 89/52**

(84) Etats contractants désignés:
**AT BE CH DE FR GB IT LI LU NL SE**

(71) Demandeur: **RHONE POULENC AGROCHIMIE**
**14-20 rue Pierre-Baizet**
**F-69009 Lyon (FR)**

(72) Inventeur: **Borrod, Guy**
**38 Bis rue des Granges**
**F-69005 Lyon (FR)**

(74) Mandataire: **Ranguis, Patrick Frédéric et al**
**RHONE POULENC AGROCHIMIE Service DPI B.P. 9163**
**F-69263 Lyon Cédex 09 (FR)**

## (54) Association herbicide synergique à base de bifénox et d'acides benzoiques à groupe imidazolinyl.

(57) Association herbicide à effet synergique résultant de la combinaison (a) d'un herbicide sélectif des céréales et (b) du bifénox caractérisée en ce que l'herbicide sélectif des céréales est choisi parmi les acides benzoïques à groupe imidazolinyle répondant à la formule générale:

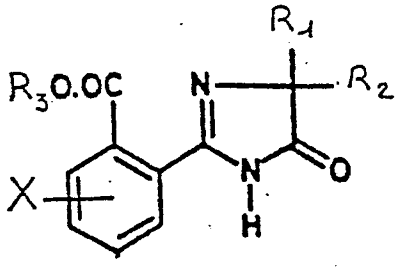

(I)

-X est l'atome d'hydrogène ou un radical $C_1$-$C_3$ alkyle ou atome d'halogène,
-$R_1$ est un radical $C_1$-$C_3$ alkyle,
-$R_2$ est un radical $C_1$-$C_3$ alkyle ou cyclohexyle ou $R_1$, $R_2$, pris ensemble, représentent avec le carbone auquel ils sont attachés, un groupe cyclohexyl ou méthyl cyclohexyl
-$R_3$ est l'atome d'hydrogène, un radical $C_1$-$C_{12}$ alkyle éventuellement substitué par un radical $C_1$-$C_3$ alcoxy ou un groupe cycloalkyle ou un groupe phényle ou un groupe furyle ou par un à trois atomes d'halogène , notamment le chlore, un cation de métal alcalin ou un ion ammonium quaternaire

EP 0 348 314 A1

**Description**

## ASSOCIATION HERBICIDE SYNERGIQUE A BASE DE BIFENOX ET D'ACIDES BENZOIQUES A GROUPE IMIDAZOLINYL

La présente invention a pour objet une association synergique comprenant le bifénox et un ou plusieurs acides benzoiques, à groupe imidazolinyl, ou un de leur sel acceptable en agriculture ou un de leur ester, l'utilisation de cette association comme herbicide notamment sous la forme de compositions herbicides, un procédé de contrôle ou de destruction des mauvaises herbes en postlevée, notamment applicable aux champs de céréales.

On connait les acides benzoiques à groupe imidazolinyl ou leur sel acceptable en agriculture ou leur ester par le brevet US 4,188,487. Ces composés présentent une activité herbicide sélective des céréales.

Le bifénox est, par ailleurs, décrit dans le "Pesticide Manual" 8ème édition, et dans US 3 652 645. Cet herbicide est connu notamment pour le désherbage des céréales.

Il est néammoins toujours souhaitable d'améliorer le spectre d'activité de ces composés.

L'association selon l'invention est caractérisée en ce que les acides benzoiques à groupe imidazolinyl ou leur sel acceptable en agriculture ou leur ester répondent à la formule générale décrite en fin de description dans laquelle:

-X est l'atome d'hydrogène ou un radical $C_1$-$C_3$ alkyle ou atome d'halogène,

-$R_1$ est un radical $C_1$-$C_3$ alkyle,

-$R_2$ est un radical $C_1$-$C_3$ alkyle ou cyclohexyle ou $R_1$, $R_2$, pris ensemble, représentent avec le carbone auquel ils sont attachés, un groupe cyclohexyl ou méthyl cyclohexyl

-$R_3$ est l'atome d'hydrogène, un radical $C_1$-$C_{12}$ alkyle éventuellement substitué par un radical $C_1$-$C_3$ alcoxy ou un groupe cycloalkyle ou un groupe phényle ou un groupe furyle ou par un à trois atomes d'halogène , notamment le chlore, un cation de métal alcalin ou un ion ammonium quaternaire

De préférence encore, pour les buts et avantages de l'invention tels qu'ils seront bien compris au vu de la description qui va suivre, on préférera les acides benzoiques à groupe imidazolinyl sous forme de sel acceptable en agriculture ou sous forme d'ester répondant à la formule (I) dans laquelle:

-$R_1$ est méthyle,

-$R_2$ est isopropyle,

-X est méthyle en position para ou méta par rapport au radical carboxy,

-$R_3$ est méthyle ou un cation de métal alcalin ou l'atome d'hydrogène,

De préférence encore on choisira un mélange d'ester répondant aux formules (II) et (III) indiquées en fin de description.

De préférence encore on utilisera un mélange connu sous le nom de code AC 222 293 commercialisé par American Cyanamid et décrit dans le "Pesticide Manual" 8ème édition, page 8395.

De manière surprenante en effet on a trouvé que l'association précitée permettait d'une part d'élargir le spectre d'activité des deux herbicides pris isolément et d'autre part révélait un effet herbicide beaucoup plus élevé que celui qui aurait été attendu.

C'est notamment le cas pour les mauvaises herbes suivantes :

| | |
|---|---|
| graminées | Alopecurus myosuroïdes ou vulpin |
| dicotylédones | Sinapis alba ou moutarde |
| | Galium aparine ou gaillet |
| | Avena fatua |

Ainsi, l'association présente un remarquable degré de synergisme comme c'est défini par PML Tammes, Netherlands Journal of Plant Pathology, 70 (1964), p. 7380 dans un article intitulé "Isoboles, une représentation graphique de synergie dans les pesticides" ou comme défini par Limpel, L.E., P.H. Schuldt and D. Lamont, 1962, Proc. NEWCC 16:48-53, en utilisant la formule :

$$E = X + Y - \frac{XY}{100}$$

où E est le pourcentage attendu d'inhibition de la croissance par un mélange des deux herbicides à des doses définies,

X est le pourcentage d'inhibition observé de la croissance par l'herbicide A à une dose définie,

Y est le pourcentage d'inhibition observé de la croissance par l'herbicide B à une dose définie.

Quand le pourcentage d'inhibition observé de l'association est plus grand que E il y a synergie.

Cette synergie permet de diminuer la dose normalement requise pour détruire certaines espèces végétales particulières ce qui induit plusieurs avantages :

- moins de produits résiduels dans le sol,
- diminution des coûts,
- etc..

De préférence, on utilisera une association dans laquelle le rapport en poids acides benzoiques à groupe imidazolinyl ou leur sel acceptable en agriculture ou leur ester de formule (I), comme décrit précédemment

- etc..

De préférence, on utilisera une association dans laquelle le rapport en poids acides benzoiques à groupe imidazolinyl ou leur sel acceptable en agriculture ou leur ester de formule (I), comme décrit précédemment avec les variantes préférées,: bifénox est compris entre 1/15 et 4 .

De façon encore plus préférée, le rapport en poids acides benzoiques à groupe imidazolinyl ou leur sel acceptable en agriculture ou leur ester de formule (I), comme décrit précédemment avec les variantes préférées,: bifénox est compris entre 1/10 et 2.

Pour leur emploi pratique, les associations selon ces associations font partie de compositions. Ces compositions, utilisables comme agents herbicides, contiennent comme matière active une association selon l'invention tel que décrit précédemment, en mélange avec des supports solides ou liquides acceptables en agriculture et les agents tensio-actifs également acceptables en agriculture. En particulier sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... Plus généralement les associations utilisées dans l'invention peuvent être combinées à tous les additifs solides correspondant aux techniques habituelles de la mise en formulation.

Les doses d'emploi des associations utilisées dans l'invention peuvent varier dans de larges limites, notamment selon la nature des mauvaises herbes à éliminer et le degré d'infestation habituel des cultures pour ces mauvaises herbes.

D'une façon générale, les compositions selon l'invention contiennent habituellement de 0,05 à 95 % environ (en poids) d'une association selon l'invention.

Par le terme "support", dans le présent exposé, on désigne une matière organique ou minérale, naturelle ou synthétique, avec laquelle l'association est combinée pour faciliter son application sur la plante. Ce support est donc généralement inerte et il doit être acceptable en agriculture, notamment sur la plante traitée. Le support est solide (argiles, silicates naturels ou synthétiques, silice, résines, cires, engrais solides, etc...) ou liquide (solvant).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notammes des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents.

La présence d'au moins un agent tensioactif est généralement indispensable lorsque l'un des deux composés au moins de l'association et/ou le support inerte ne sont pas solubles dans l'eau et que l'agent vecteur de l'application est l'eau.

Comme formes de compositions solides, on peut citer les poudres pour poudrage (à teneur en association pouvant aller jusqu'à 100 %).

Les poudres mouillables (ou poudre à pulvériser) sont habituellement préparées de manière qu'elles contiennent 20 à 95 % d'association, et elles contiennent habituellement, en plus du support solide, de 0 à 5 % d'un agent mouillant, de 3 à 10 % d'un agent dispersant, et, quant c'est nécessaire, de 0 à 10 % d'un ou plusieurs stabilisants et/ou autres additifs, comme des agents de pénétration, des adhésifs, ou des agents antimottants, colorants, etc..

A titre d'exemple, voici diverses compositions de poudres mouillables (Exemple) :

| | |
|---|---|
| - association | 50 % |
| - lignosulfonate de calcium (défloculant) | 5 % |
| - isopropylnaphtalène sulfonate (agent mouillant anionique) | 1 % |
| - silice antimottante | 5 % |
| - kaolin (charge) | 39 % |

Exemple:

| | |
|---|---|
| - association | 80 % |
| - alkylnaphtalène sulfonate de sodium | 2 % |
| - lignosulfonate de sodium | 2 % |
| - silice antimottante | 3 % |
| - kaolin | 13 % |

Exemple:

| | |
|---|---|
| - association | 50 % |
| - alkylnaphtalène sulfonate de sodium | 2 % |
| - méthyl cellulose de faible viscosité | 2 % |
| - terre de diatomées | 46 % |

Exemple:

| | |
|---|---|
| - association | 400 g |
| - lignosulfonate de sodium | 50 g |
| - dibutylnaphtalène sulfonate de sodium | 10 g |
| - silice | 540 g |

Exemple:

| | |
|---|---|
| - association | 250 g |
| - isooctylphénoxy-polyoxyéthylène-éthanol | 25 g |
| - mélange équipondéral de craie de Champagne et d'hydroxyéthylcellulose | 17 g |
| - aluminosilicate de sodium | 543 g |
| - kieselguhr | 165 g |

Exemple:

| | |
|---|---|
| - association | 100 g |
| - mélange de sels de sodium de sulfates d'acides gras saturés | 30 g |
| - produit de condensation d'acide naphtalène sulfonique et de formaldéhyde | 50 g |
| - kaolin | 820 g |

Pour obtenir ces poudres à pulvériser ou poudres mouillables, on mélange intimement les matières actives dans des mélangeurs appropriés avec les substances additionnelles ou on imprègne l'un ou l'autre ou les deux composés de l'association sur la charge poreuse et on broie avec des moulins ou autre broyeurs appropriés. On obtient par là des poudres à pulvériser dont la mouillabilité et la mise en suspension sont avantageuses ; on peut les mettre en suspension avec de l'eau à toute concentration désirée.

A la place des poudres mouillables, on peut réaliser des pâtes. Les conditions et modalités de réalisation et d'utilisation de ces pâtes sont semblables à celles des poudres mouillables ou poudres à pulvériser.

Comme formes de compositions liquides on peut citer les concentrés émulsionnables.

Les concentrés émulsionnables ou solubles comprennent le plus souvent 10 à 80 % de matière active et un solvant.

En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A titre d'exemple, voici la composition de quelques concentrés émulsionnable:

Exemple:

| | |
|---|---|
| - matière active | 400 g/l |
| - dodécylbenzène sulfonate alcalin | 24 g/l |
| - nonylphénol oxyéthylé à 10 molécules d'oxyde d'éthylène | 16 g/l |
| - cyclohexanone | 200 g/l |
| - solvant aromatique | q.s.p 1 litre |

Selon une autre formule de concentré émulsionnable, on utilise :

Exemple:

| | |
|---|---|
| - matière active | 250 g |
| - huile végétale époxydée | 25 g |
| - mélange de sulfonate d'alcoylaryle et d'éther de polyglycol et d'alcools gras | 100 g |
| - diméthylformamide | 50 g |
| - xylène | 575 g |

A partir de ces concentrés, on peut obtenir par dilution avec de l'eau des émulsions de toute concentration désirée, qui conviennent particulièrement à l'application sur les feuilles.

Les associations éventuellement sous forme de compositions décrites ci-avant sont destinées plus particulièrement au traitement herbicide en postlevée des mauvaises herbes.

Il est avantageux d'utiliser des produits prêts à l'emploi contenant l'association des matières actives éventuellement sous forme de compositions. On peut également utiliser des produits préparés juste avant l'emploi, par mélange extemporané des matières actives ou des compositions contenatn chacune des matières actives.

Ainsi, l'invention a également pour objet un procédé pour combattre les mauvaises herbes en post-levée, particulièrement en un lieu de culture de céréales comme par exemple le blé, l'orge, l'avoine, le seigle, caractérisé en ce que l'on applique en leur endroit une dose efficace d'une association ou d'une composition telle que définie ci-dessus. On appliquera de préférence les associations ou compositions décrites ci-dessus à raison de 100 à 500 g/ha d'acide benzoique à groupe imidazolinyl ou leur sel acceptable en agriculture ou leur ester répondent à la formule générale, avec les variantes préférées, décrite précédemment et 250 à 1000g/ha de bifénox.

Exemple 1 :

Essai montrant la nature de l'effet synergique biologique de l'association AC 222 293-bifénox sur Sinapis alba (moutarde blanche) aprés la levée.

Dans des pots de 7 x 7 x 8 cm remplis de terre agricole légère, on sème des graines de Sinapis alba. On recouvre ensuite les graines d'une couche de terre d'environ 3 mm d'épaisseur, et on laisse les graines germer jusqu'à ce qu'elles donnent naissance à une pousse à un stade convenable. Le stade de traitement est le stade de "dèploiment des cotylédons", et de développement de la première vraie feuille".

Les pots sont ensuite traités par pulvérisation d'une quantité correspondant à une dose d'application, en volume, de 500 l/ha, contenant l'association à la concentration désirée. Le mélange pour pulvérisation est préparé en mélangeant :

- de l'eau,
- une suspension concentrée à 480 g/l de bifénox (MODOWN 4 F)
- une formulation granulée dispersable à 20 % de AC 222 293( ASSERT )

Le traitement avec la bouillie est donc effectué sur des plantes au stade précédemment indiqué (on utilise le terme de bouillie pour désigner, en général, les compositions diluées à l'eau, telles qu'on les applique sur les végétaux ou sur le sol).

Différentes concentrations des matières actives du liquide de pulvérisation sont utilisées, correspondant à différentes doses de matières actives appliquées.

Les pots traités sont ensuite placés dans des bacs destinés à recevoir de l'eau d'irrigation par subirrigation, et ils sont maintenus à température ambiante pendant 24 jours à une humidité relative de 70 %.

24 jours après traitement, on compte le nombre de plantes vivantes dans les pots traités par le liquide de pulvérisation contenant l'association à tester, et on compte également le nombre de plantes vivantes dans un pot témoin traité suivant les mêmes conditions mais au moyen d'un liquide de pulvérisation ne contenant pas de matières actives. Le pourcentage égal à 100 % indique qu'il y a une destruction totale de l'espèce de plante considérée, et un pourcentage égal à 0 % indique que le nombre de plantes vivantes dans le pot traité est identique à celui dans le pot-témoin.

Sinapis alba

| | | 250g | 500g | 1000g | Bifénox |
|---|---|---|---|---|---|
| | | 10 | 20 | 50 | |
| 250g | 50 | 98 | 70 | 98 | |
| 500g | 40 | 98 | 100 | 100 | |
| AC 222 293 | | | | | |

Exemple 2 :

Essai montrant la nature de l'effet synergique biologique de l'association AC 222 293-bifénox sur Galium aparine aprés la levée.

L'expérimentation est conduite selon celle décrite à l'exemple 1 en ayant semé des graines de Galium aparine (gaillet).

Les résultats indiqués dans le tableau ci-dessous montrent clairement, en se référant à la formule indiquée en début de description le degré excellent et inattendu de synergie obtenue avec l'association de l'invention

Galium aparine

| | | 500g | 1000g | 1500 | Bifénox |
|---|---|---|---|---|---|
| | | 0 | 10 | 10 | |
| 250g | 0 | 20 | 20 | 30 | |
| 500g | 10 | 20 | 30 | 40 | |
| AC 222 293 | | | | | |

Exemple 3 :

Essai montrant la nature de l'effet synergique biologique de l'association AC 222 293-bifénox sur Avena fatua aprés la levée.

L'expérimentation est conduite selon celle décrite à l'exemple 1 en ayant semé des graines d'Avena fatua. Le stade de traitement est le stade de formation de la deuxième feuille.

Les résultats indiqués dans le tableau ci-dessous montrent clairement, en se référant à la formule indiquée en début de description le degré excellent et inattendu de synergie obtenue avec l'association de l'invention

Avena fatua

| | | 500g | 1000g | Bifénox |
|---|---|---|---|---|
| | | 0 | 10 | |
| 250g | 0 | 0 | 10 | |
| 500g | 0 | 20 | 60 | |
| 1000g | 20 | 30 | 100 | |
| AC 222 293 | | | | |

Exemple 4 :

Essai montrant la nature de l'effet synergique biologique de l'association AC 222 293-bifénox sur Alopecurus myosuroides aprés la levée.

L'expérimentation est conduite selon celle décrite à l'exemple 1 en ayant semé des graines d'Alopecurus myosuroides (vulpin). Le stade de traitement est le stade de la formation de la deuxième feuille.

Les résultats indiqués dans le tableau ci-dessous montrent clairement, en se référant à la formule indiquée en début de description le degré excellent et inattendu de synergie obtenue avec l'association de l'invention

Alopecurus myosuroïdes (vulpin)

| | | 250g | 500g | 1000g | Bifénox |
|---|---|---|---|---|---|
| | | 0 | 0 | 0 | |
| 250g | 10 | 20 | 20 | 10 | |
| 500g | 20 | 40 | 20 | 30 | |
| 1000g | 30 | 40 | 70 | 60 | |
| AC 222 293 | | | | | |

Il a également été trouvé qu'il était particulièrement avantageux de combiner l'association précédemment décrite avec l'isoproturon ou N-(isopropyl-4-phényl)-N',N'-diméthylurée.

De préférence ce mélange ternaire comprendra les produits dans les proportions suivantes en partie en poids :

| | |
|---|---|
| Acide benzoïque à groupe imidazolinyl | 100 - 500 |
| Bifénox | 500 - 750 |
| Isoproturon | 500 - 1000 |

L'invention concerne donc également une composition herbicide contenant le mélange ternaire et un support inerte acceptable en agriculture comme décrit précédemment.

L'invention concerne également un procédé de contrôle des mauvaises herbes dans les cultures de céréales par application du mélange ternaire ou d'une composition contenant ce mélange ternaire à raison de :

- 100 à 500 g d'acide benzoïque à groupe imidazolinyl
- 500 à 750 g de bifénox
- 500 à 1000 g d'isoproturon.

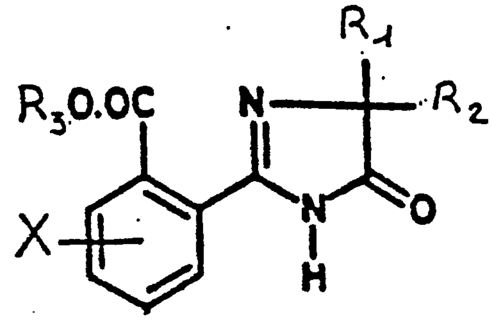

(I)

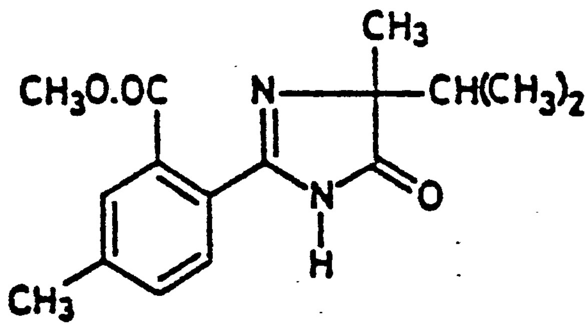 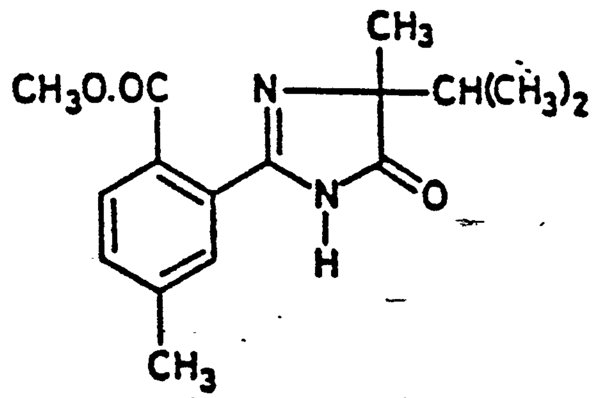

AC 222 293

ou "Assert" marque enregistrée

**Revendications**

1) Association herbicide à effet synergique résultant de la combinaison (a) d'un herbicide sélectif des céréales et (b) du bifénox caractérisée en ce que l'herbicide sélectif des céréales est choisi parmi les acides benzoïques à groupe imidazolinyle répondant à la formule générale décrite en fin de description dans laquelle:

-X est l'atome d'hydrogène ou un radical $C_1$-$C_3$ alkyle ou atome d'halogène,

-$R_1$ est un radical $C_1$-$C_3$ alkyle,

-$R_2$ est un radical $C_1$-$C_3$ alkyle ou cyclohexyle ou $R_1$, $R_2$, pris ensemble, représentent avec le carbone auquel ils sont attachés, un groupe cyclohexyl ou méthyl cyclohexyl

-$R_3$ est l'atome d'hydrogène, un radical $C_1$-$C_{12}$ alkyle éventuellement substitué par un radical $C_1$-$C_3$ alcoxy ou un groupe cycloalkyle ou un groupe phényle ou un groupe furyle ou par un à trois atomes

d'halogène , notamment le chlore, un cation de métal alcalin ou un ion ammonium quaternaire

2) Association herbicide selon la revendication 1), caractérisée en ce que
les acides benzoiques à groupe imidazolinyl sont sous forme de sel acceptable en agriculture ou sous forme d'ester répondant à la formule (I) dans laquelle:
-$R_1$ est méthyle,
-$R_2$ est isopropyle,
-X est méthyle en position para ou méta par rapport au radical carboxy,
-$R_3$ est méthyle ou un cation de métal alcalin ou l'atome d'hydrogène,

3) Association herbicide selon la revendication 2), caractérisée en ce que l'herbicide sélectif des céréales est un mélange d'ester répondant aux formules (II) et (III) indiquées en fin de description.

4) Association herbicide selon la revendication 3), caractérisée en ce que l'herbicide sélectif des céréales est le mélange connu sous le nom de code AC 222 293 commercialisé par American cyanamid et décrit dans le "Pesticide Manual" 8ème édition, page 8395.

5) Association herbicide selon la revendication 1), caractérisée en ce que le rapport en poids a : b est compris entre 1/15 et 4 de préférence entre 1/10 et 2.

6) Mélange ternaire constitué de l'association selon l'une des revendications 1 à 5 en combinaison avec de l'isoproturon, de préférence dans les proportions suivantes en partie en poids :

| | |
|---|---|
| Acide benzoïque à groupe imidazolinyl' | 100 - 500 |
| Bifénox | 500 - 750 |
| Isoproturon | 500 - 1000 |

7) Composition herbicide comprenant une association selon l'une des revendications 1 à 5, ou un mélange ternaire selon la revendication 6, en combinaison avec un support inerte acceptable en agriculture.

8) Procédé de contrôle des mauvaises herbes en postlevée, notamment dans les cultures de céréales, caractérisé en ce que l'on applique une association selon l'une des revendications 1 à 5 ou une composition selon la revendication 6 à raison de 100 à 500 g/ha d'acides benzoïques à groupe imidazolinyl selon l'une des revendications 1 à 5 et 250 à 1000 g/ha de bifénox.

9) Procédé de contrôle selon la revendication 7, caractérisé en ce que les mauvaises herbes sont choisies parmi :Sinapis alba,
Alopecurus myosuroides,
Galium aparine,
Avena fatua.

10) Procédé de contrôle des mauvaises herbes dans les cultures de céréales par application d'un mélange ternaire selon la revendication 6, ou d'une composition contenant ce mélange ternaire selon la revendication 7 à raison de :
- 100 à 500 g d'acide benzoïque à groupe imidazolinyl
- 500 à 750 g de bifénox
- 500 à 1000 g d'isoproturon.

Office européen des brevets

# RAPPORT DE RECHERCHE EUROPEENNE

Numero de la demande

EP 89 42 0222

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | US-A-4 188 487 (M. LOS)<br>--- | | A 01 N 43/50 //<br>(A 01 N 43/50<br>A 01 N 37:48<br>A 01 N 47:30 ) |
| A | FR-A-2 584 265 (RHONE-POULENC AGROCHIMIE)<br>----- | | |
| | | | **DOMAINES TECHNIQUES RECHERCHES (Int. Cl.4)** |
| | | | A 01 N |

Le présent rapport a été établi pour toutes les revendications

| Lieu de la recherche | Date d'achèvement de la recherche | Examinateur |
|---|---|---|
| LA HAYE | 13-09-1989 | DECORTE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)